# EUROPÄISCHE PATENTSCHRIFT

(11) **EP 2 730 822 B1**
(45) Veröffentlichungstag und Bekanntmachung des Hinweises auf die Patenterteilung: **15.04.2020**
(21) Anmeldenummer: 13004563.6
(22) Anmeldetag: 18.09.2013
(51) Int. Cl.: F16K 15/04, E05F 3/12, F16K 17/04

(54) **Regulierventil für die Regulierung eines Hydraulikvolumenstroms**
Control valve for the regulation of a hydraulic volume flow
Vanne de régulation pour la régulation d'un débit volumique hydraulique

(30) Priorität: 13.11.2012 DE 102012110891
(43) Veröffentlichungstag der Anmeldung: 14.05.2014
(73) Patentinhaber: dormakaba Deutschland GmbH, 58256 Ennepetal (DE)
(72) Erfinder: Hellwig, Alexander, D-58256 Ennepetal (DE)
(74) Vertreter: Balder IP Law, S.L.

(56) Entgegenhaltungen:
- EP-A1- 1 672 157
- EP-A1- 1 967 775
- DE-A1- 2 721 974
- DE-A1- 3 601 885
- US-A- 4 287 912

## Beschreibung

Die vorliegende Erfindung betrifft ein Regulierventil für die Regulierung eines Hydraulikvolumenstroms, einen Türschließer für eine Tür, aufweisend zumindest ein Regulierventil sowie ein Verfahren zum Regulieren eines Hydraulikvolumenstroms.

Regulierventile für die Regulierung von Hydraulikvolumenströmen sind größtenteils bekannt. Sie werden insbesondere bei Türschließern eingesetzt, um die Schließbewegung hinsichtlich der Kraftausübung zu dämpfen. Die Dämpfungscharakteristik wird über das Regulierventil eingestellt. Bei bekannten Regulierventilen ist dabei üblicherweise eine Ausbildung als Nadelventil vorgesehen, welche einen Ringspalt zur Verfügung steht, wenn es entlang einer Bewegungsachse translatorisch bewegt wird. Je nach Größe des Ringspaltes wird ein größerer oder ein geringerer Fluid-pfad hinsichtlich des Strömungsquerschnitts zur Verfügung gestellt. Je geringer der Strömungsquerschnitt ist, umso stärker ist die zugehörige Dämpfung der Dämpfungscharakteristik.

Nachteilhaft bei bekannten Regulierventilen ist es, dass sie ausschließlich die Regulierfunktion zur Verfügung stellen. Für diese Regulierfunktion ist darüber hinaus ein relativ aufwendiger Herstellprozess notwendig, da zwischen einem Ventilkörper, welcher ein Regulierbauteil einschließt, und diesem Regulierbauteil der Dichtsitz ausgebildet werden muss. Dies erfordert hohen fertigungstechnischen Aufwand. Ein weiterer Nachteil bekannter Regulierventile ist es, dass sie hinsichtlich einer Überdrucksituation Schaden nehmen können, insbesondere einer Verregulierung, also einem unerwünschten Verstellen der eingestellten Dämpfungscharakteristik, ausgesetzt sind. Dementsprechend muss bei bekannten Regulierventilen zum Schutz gegen eine solche automatische Verregulierung ein Rückschlagventil vorgesehen werden, welches den zulässigen Maximaldruck begrenzt. Für dieses zusätzliche Rückschlagventil ist zusätzlicher Bauraum und zusätzliches Material notwendig, wodurch das Gesamtvolumen und die Kosten eines Türschließers mit einem Regulierventil und einem solchen Rückschlagventil erhöht werden.

Darüber hinaus ist aus der DE 27 21 974 A1 ein Türschließer mit einer Ventilanordnung bekannt, bei dem ein mit einer ersten Feder beaufschlagtes den Durchfluss einschränkendes Teil mit einem Kolbenteil versehen ist, welches wiederum so angeordnet ist, dass es sich infolge des Strömungsdruckes gegen die Kraft einer anderen Feder bewegen kann, und dass das Kolbenteil so angeordnet ist, dass es den Fluss durch den Drosselkanal des den Durchfluss einschränkenden Teiles leitet.

Aus der EP 1 672 157 A1 ist ein herkömmliches Ventil in der Art eines Rückschlagventils für einen Türschließer bekannt, bei dem eine mit einer Federkraft beaufschlagte Kugel in einen Dichtungssitz gepresst wird. Dabei wird in einer ersten Richtung durch Überwindung der durch die Feder eingestellten Sperrkraft ein Durchfluss ermöglicht und in der entgegen gesetzten Richtung eine entsprechende Sperrwirkung erzielt.

Schließlich ist aus der EP 1 967 775 A1 ein Überdruckventil bekannt, bei dem eine Kugel gegen eine Federkraft in einen Dichtungssitz gepresst ist, so dass bei Erreichen eines durch die Federkraft voreingestellten Grenzdruckes das Ventil zwecks Entlastung öffnet bis der eingestellte Grenzdruck wieder unterschritten wird und das Ventil wieder in die Schließposition übergeht.

Es ist Aufgabe der vorliegenden Erfindung, die voranstehend beschriebenen Nachteile zumindest teilweise zu beheben. Insbesondere ist es Aufgabe der vorliegenden Erfindung, ein Regulierventil, einen Türschließer und ein Verfahren zur Verfügung zu stellen, welche in kostengünstiger und einfacher Weise den Bauraum und die Komplexität des Regulierventils bzw. des Türschließers reduzieren.

Voranstehende Aufgabe wird gelöst durch ein Regulierventil mit den Merkmalen des Anspruchs 1, einen Türschließer mit den Merkmalen des Anspruchs 11 und ein Verfahren mit den Merkmalen des Anspruchs 12. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Regulierventil beschrieben sind, selbstverständlich auch im Zusammenhang mit dem erfindungsgemäßen Verfahren und dem erfindungsgemäßen Türschließer und jeweils umgekehrt, so dass bezüglich der Offenbarung zu den einzelnen Erfindungsaspekten stets wechselseitig Bezug genommen wird bzw. werden kann.

Ein erfindungsgemäßes Regulierventil dient der Regulierung eines Hydraulikvolumenstroms. Ein solches Regulierventil weist einen Ventilkörper mit einem Ventileinlass und einem Ventilauslass auf. Weiter ist eine in dem Ventilkörper entlang einer Bewegungsachse bewegbare Hülse mit einer Innendichtfläche vorgesehen. Ein Regulierbauteil bildet mit einer Außendichtfläche mit der genannten Innendichtfläche einen Dichtsitz für das Abdichten der Hülsenöffnung der Hülse aus. Dabei ist das Regulierbauteil in Richtung des Dichtsitzes von einer Federvorrichtung mit einer Federkraft beaufschlagt. Ein erfindungsgemäßes Regulierventil zeichnet sich dadurch aus, dass das Regulierbauteil in Richtung der Federkraft durch die Hülsenöffnung ragt. Das Regulierbauteil ist ausgebildet, um bei einer Bewegung der Hülse entlang der Bewegungsachse an einer Innenwand des Ventilkörpers anzuschlagen.

Ein erfindungsgemäßes Regulierventil weist demnach zwei grundsätzliche Funktionalitäten in einer einzigen Ventilanordnung auf. So wird im Wesentlichen in bekannter Weise ein Rückschlagventil zur Verfügung gestellt. Dieses wird ausgebildet durch die Kombination eines Regulierbauteils und einer Hülse, die gemeinsam einen Dichtsitz ausbilden. Das Regulierbauteil kann in Richtung des Dichtsitzes mit der Federkraft durch eine Federvorrichtung beaufschlagt werden. Gegen diese Federkraft kann der Dichtsitz aufgehoben werden, indem eine translatorische Relativbewegung des Regulierbauteils zur Hülse stattfindet. Mit anderen Worten löst sich das Regulierbauteil hinsichtlich des Kontakts zwischen Außendichtfläche und Innendichtfläche, wenn es in die Hülse hineingedrückt und damit die Federkraft erhöht wird. Diese Rückschlagfunktionalität kann z. B. hinsichtlich des gewünschten Maximaldrucks eingestellt werden, indem die Vorspannung der Federvorrichtung definiert wird.

Mithilfe eines erfindungsgemäßen Regulierventils wird der voranstehend beschriebenen Überdruckfunktion jedoch zusätzlich noch eine Regulierfunktion hinzugeordnet. Diese erfolgt durch eine translatorische Bewegung der Hülse relativ zum Ventilkörper. Es sind also zwei Relativbewegungen für die beiden unterschiedlichen Funktionen zu unterscheiden. Hinsichtlich der Rückschlagfunktionalität findet eine Relativbewegung zwischen dem Regulierbauteil und der Hülse in translatorischer Weise statt. Für die Regulierung findet eine Relativbewegung hauptsächlich zwischen der Hülse und dem Ventilkörper statt. Durch die Regulierbewegung wird zusätzlich eine Relativbewegung zwischen dem Regulierbauteil und der Hülse erzeugt, wie dies nachfolgend erläutert wird.

Um bei einem erfindungsgemäßen Regulierventil eine Regulierung durchzuführen, wird die Hülse entlang der Bewegungsachse relativ zum Ventilkörper bewegt. Diese Bewegung erfolgt auf die Innenwand des Ventilkörpers zu, an welchem das Regulierbauteil anschlägt. Das Anschlagen erfolgt zu einem Zeitpunkt, zu welchem die Hülse selbst noch beabstandet zur Innenwand vorliegt. Dies wird dadurch erzielt, dass im geschlossenen Zustand, also im ausgebildeten Dichtsitz, das Regulierbauteil durch die Hülsenöffnung hindurchragt. Bei einer Bewegung der Hülse gemeinsam mit dem Regulierbauteil auf die zugehörige Innenwand des Ventilkörpers zu, wird dementsprechend zuerst das Regulierbauteil an dieser Innenwand anschlagen. Nach diesem Kontakt wird eine Weiterbewegung der Hülse relativ zum Ventilkörper nicht mehr in einer Weiterbewegung des Regulierbauteils resultieren. Vielmehr verbleibt das Regulierbauteil an Ort und Stelle, so dass nunmehr eine Relativbewegung der Hülse zum Ventilkörper und relativ zum Regulierbauteil erfolgt. Diese zweite Relativbewegung erzeugt den bereits beschriebenen Ringspalt, wodurch sich der Dichtsitz zwischen Außendichtfläche und Innendichtfläche auflöst. Je nachdem wie weit das Regulierbauteil nach diesem Reguliervorgang noch über die Hülsenöffnung hinausragt, ist die Größe des Ringspaltes eingestellt. Mit anderen Worten kann durch die Strecke, welche als Relativbewegung zwischen Hülse und Ventilkörper zurückgelegt worden ist, der Ringspalt hinsichtlich der gegebenen geometrischen Konstellation vorherbestimmt werden. Dies ermöglicht eine besonders genaue Einstellung des Ringspaltes und damit eine besonders feine Justierung hinsichtlich der Regulierung des Hydraulikvolumenstroms. In jeder Situation, also insbesondere auch in teilgeöffneten Positionen des Dichtsitzes, bei welchem zwar ein Ringspalt existiert, aber das Regulierbauteil trotzdem noch weiter über die Hülsenöffnung hinausragt, ist immer noch die bereits beschriebene Rückschlagfunktion gegeben. So kann selbstverständlich bei auftretendem Überdruck das Regulierbauteil noch weiter einfedern, wodurch sich die Federkraft weiter erhöht und sich der Ringspalt vergrößert. Die Federvorrichtung gibt als entlang der Bewegungsachse noch einen Federweg für das Regulierbauteil vor.

Bei einem erfindungsgemäßen Regulierventil kann die Innenwand des Ventilkörpers an den beschriebenen Anschlag mit dem Regulierbauteil angepasst sein. Insbesondere ist eine Erhöhung an dieser Regulierwand möglich, um die Differenz zwischen dem bestehenden Dichtsitz und der vollen Öffnung und damit die geometrische Größe des Ringspaltes noch weiter erhöhen zu können.

Ein Dichtsitz im Sinne der vorliegenden Erfindung ist eine Abdichtung über sich kontaktierende Flächen. Im vorliegenden Fall kontaktieren sich die Innendichtfläche und die Außendichtfläche, die vorzugsweise ringförmig umlaufend ausgebildet sind. Hierfür weisen die Innendichtfläche und die Außendichtfläche vorzugsweise ähnliche, insbesondere identische geometrische Erstreckungen auf, so dass sie beim Zusammensetzen zwischen Regulierbauteil und Hülse automatisch den beschriebenen Dichtsitz ausbilden.

Es ist darauf hinzuweisen, dass die Richtung, mit welcher die Federvorrichtung das Regulierbauteil mit der Federkraft beaufschlagt nicht zwangsläufig exakt auf den Dichtsitz wirkt, sondern selbstverständlich auch im Winkel dazu angeordnet sein kann. Auch muss nicht zwangsläufig eine Korrelation der Richtung der Federkraft und der Bewegungsachse der bewegbaren Hülse ausgeführt sein. Grundsätzlich erzeugt die Federkraft direkt oder indirekt die Dichtkraft am Dichtsitz.

Die Hülse ist insbesondere im Wesentlichen zylinderförmig mit Öffnungen, die nach oben und nach unten gerichtet ist. Die Hülsenöffnung, wie sie voranstehend erläutert worden ist, ist dabei die Öffnung, welche nach unten zeigt, und welche auch als Reguliereinlass oder Fluideinlass bezeichnet werden kann. Selbstverständlich weist die Hülse zumindest eine weitere Öffnung, insbesondere einen Regulierauslass bzw. einen Fluidauslass auf, über welchen das durch den Ringspalt bei geöffnetem Regulierventil geförderte Hydraulikfluid wieder aus der Hülse austreten kann. Dieser Regulierauslass korreliert vorzugsweise mit dem Ventilauslass, so dass ein nachfolgend beschriebener Fluidpfad zur Verfügung gestellt wird. Hydraulikfluid kann durch den Ventileinlass in das Regulierventil, insbesondere den Ventilkörper eintreten. Über das Regulierbauteil und einen Dichtsitz bzw. einen Ringspalt zwischen der Innendichtfläche und der Außendichtfläche kann das Hydraulikfluid das Regulierbauteil passieren. Dabei tritt es durch die Hülsenöffnung hindurch. Durch eine weitere Öffnung, insbesondere einen Regulierauslass, tritt das Hydraulikfluid wieder aus der Hülse aus und passiert dabei anschließend den Ventilauslass, um das Regulierventil zu verlassen.

Die Federvorrichtung eines erfindungsgemäßen Regulierventils kann z. B. als Federelement, insbesondere als Spiralfeder ausgebildet sein. Weiter kann die Federvorrichtung ausgelegt sein, einen Überdruck von ca. 120 bar auszuhalten. Vorzugsweise ist ein Öffnen bei einem Überdruck von ca. 80 bar gewünscht. Als Material für das Regulierbauteil kann z. B. Glas, Stahl, Keramik oder ein ähnliches Material eingesetzt werden. Das Material für die beschriebene Hülse ist vorzugsweise Zinkdruckguss oder Messing, um Reibungen und Dauerstabilität zu optimieren. Der Hub zwischen dem geschlossenen Zustand und dem geöffneten Zustand des Regulierventils, also die relativ maximale Relativbewegung zwischen dem Regulierbauteil und der Hülse beträgt vorzugsweise einen Wert im Bereich von ca. 1,5 mm.

Ein erfindungsgemäßes Regulierventil kann dahingehend weitergebildet werden, dass die Innendichtfläche an der Hülse und/oder die Außendichtfläche an dem Regulierbauteil umlaufend ausgebildet sind. Eine umlaufende Ausbildung ermöglicht eine besonders einfache und automatische Erzeugung des Dichtsitzes bei der Beaufschlagung mit Federkraft. Vorzugsweise kann damit eine Ringdichtung erzeugt werden, welche beim Öffnen durch einen Ringspalt ersetzt wird. Diese umlaufende Ausbildung erleichtert darüber hinaus die Fertigung, da insbesondere ein spanendes Drehverfahren eingesetzt werden kann. Auch kann eine gute Einstellbarkeit vorgesehen werden, da über die translatorische Relativbewegung zwischen Regulierbauteil und Hülse der sich ergebende Ringspalt rechnerisch gut vorhergesagt werden kann. Dies ermöglicht eine gute Einstellbarkeit der Dämpfungscharakteristik des Regulierventils.

Vorteilhaft ist es weiter, wenn bei einem erfindungsgemäßen Regulierventil die Innendichtfläche und/oder die Außendichtfläche zumindest abschnittsweise rotationssymmetrisch ausgebildet sind. Eine rotationssymmetrische Ausbildung fördert die Herstellbarkeit noch weiter. Dabei ist insbesondere ein Kugelsitz vorgesehen, wobei das Regulierbauteil im Wesentlichen kugelförmig bzw. halbkugelförmig ausgebildet ist. Auch andere Oberflächen, insbesondere gekrümmte Oberflächen, sind für den Dichtsitz im Sinne der vorliegenden Erfindung denkbar. Ein weiteres Beispiel ist ein Kegelsitz, welcher z. B. in Korrelation mit einem Regulierbauteil vorhanden ist, welches nadelförmig ausgebildet ist. Selbstverständlich sind auch andere Regulierbauteile, z. B. tellerförmige Regulierbauteile im Sinne der vorliegenden Erfindung denkbar.

Vorteilhaft ist es weiter, wenn bei einem erfindungsgemäßen Regulierventil das Regulierbauteil ausgebildet ist, an einer Kontaktstelle an der Innenwand des Ventilkörpers anzuschlagen. Dabei ist die Kontaktstelle von dem Ventileinlass beabstandet angeordnet. Damit wir sichergestellt, dass durch das Anschlagen keine oder nur eine geringe Beeinträchtigung des Fluid-stroms durch den Ventileinlass erfolgt. Insbesondere erfolgt diese Korrelation mit Bezug auf den Mündungsbereich des Ventileinlasses an der Innenwand des Ventilkörpers. Ein vollständiges Abdecken ist zu vermeiden, da ansonsten das Öffnen des Regulierbauteils hinsichtlich des Ringspaltes einem Schließen des Ventileinlasses gleichkommen würde. Die Beabstandung erfolgt insbesondere durch ein Parallelverschieben der Bewegungsachse der Hülse und des Regulierbauteils relativ zu der Einlassachse im Mündungsbereich des Ventileinlasses.

Ebenfalls von Vorteil ist es, wenn im Rahmen der vorliegenden Erfindung bei dem Regulierventil die Hülse einen Hülsenkopf mit einer Innendichtfläche aufweist, welche in einen Hülsenträger eingesetzt ist. Dabei stützt sich die Federvorrichtung insbesondere gegen den Hülsenträger ab. Die Hülse ist bei dieser Ausführungsform also mehrteilig ausgebildet. In dem Hülsenträger kann auch ein Fluidkanal vorgesehen sein, welcher als bereits beschriebener Regulierauslass dient. Die Hülsenöffnung dient bei dieser Ausführungsform wieder als Reguliereinlass. Damit wird ein erweiterter Fluidpfad zur Verfügung gestellt. Die Fertigungsmöglichkeiten sind bei der Aufteilung auf zwei Bauteile für die Hülse noch weiter verbessert. Insbesondere kann hinsichtlich der Herstellung des Dichtsitzes, also der Korrelation zwischen Außendichtfläche und Innendichtfläche, in leichterer Weise die gewünschte Toleranzgenauigkeit erreicht werden. Die Montage der beiden Bauteile zueinander erfolgt z. B. durch Einschrauben oder passgenaues Einsetzen bzw. Einpressen des Hülsenkopfes in den Hülsenträger. Dabei wird vorzugsweise gleichzeitig die Federvorspannung der Federvorrichtung eingestellt.

Im Sinne der vorliegenden Erfindung ist es weiter vorteilhaft, wenn bei dem Regulierventil die Federvorrichtung derart ausgebildet ist, dass die Federkraft hinsichtlich ihres Betrages einstellbar ist. Diese Einstellung kann z. B. durch eine Gewindeverschraubung vonstattengehen, so dass die geometrische Erstreckung der Federvorrichtung eingestellt werden kann. Damit kann ein Vorspannen der Feder erfolgen, um die definierte Öffnungskraft einzustellen. Auf diese Weise ist es möglich, je nach Einsatzsituation unterschiedliche Überdruckvorgaben einzustellen, um den maximalen Überdruck für das Öffnen der Überdruckfunktion definieren zu können.

Vorteilhaft ist es darüber hinaus, wenn bei einem erfindungsgemäßen Regulierventil die Federvorrichtung ausgebildet ist, das Regulierbauteil entlang der Bewegungsachse mit der Federkraft zu beaufschlagen. Die Beaufschlagungsrichtung und die Bewegungsachse korrelieren also miteinander und sind insbesondere koaxial zueinander ausgerichtet. Dies reduziert den Bauraum, da keine winklige Übersetzung zwischen den einzelnen Bauteilen mehr berücksichtigt werden muss. Insbesondere wird durch die Koaxialität der Bewegungsachse und der Richtung der Federkraftbeaufschlagung ein minimierter Bauraum zur Verfügung gestellt. Die beiden Grundfunktionen der Überdruckfunktion und der Regulierfunktion werden somit auf minimalen Bauraum zur Verfügung gestellt, so dass eine Einbausituation in einem zugehörigen Türschließer ebenfalls minimierten Bauraum erfordert.

Vorteilhaft ist es ebenfalls, wenn bei einem erfindungsgemäßen Regulierventil wenigstens ein Dichtmittel angeordnet ist, um die Hülse gegen den Ventilkörper abzudichten. Insbesondere werden dabei Standarddichtmittel, z. B. in Form von O-Ringen verwendet. Diese können sich gemeinsam mit dem jeweiligen Bauteil bewegen oder fest im Ventilkörper angeordnet sein. Dabei kann durch die beschriebenen Relativbewegungen auch eine Erhöhung der Dichtkraft durch Quetschen der jeweiligen Dichtmittel in Kauf genommen werden. Das Abdichten erfolgt dabei vorzugsweise gegen die Umgebung des Ventils, um eine Verregulierung des Ventils in ungewünschter Weise zu verhindern.

Ein weiterer Vorteil kann erzielt werden, wenn bei einem erfindungsgemäßen Regulierventil zwischen der Hülse und dem Ventilkörper eine Gewindeverbindung angeordnet ist. Über diese Gewindeverbindung wird durch Rotation der Hülse die Bewegung der Hülse entlang der Bewegungsachse erzeugt. Insbesondere kommt als Gewindeverbindung ein Feingewinde zum Einsatz, um die Strecke entlang der Bewegungsachse möglichst fein justieren zu können. Dies ermöglicht eine besonders feine Einstellung, da die Größe des Ringspaltes und damit der erzeugte Strömungsquerschnitt für das Hydraulikfluid direkt mit der translatorischen Bewegungsstrecke der Hülse zusammenhängt. Die Gewindeverbindung ist vorzugsweise selbstsichernd ausgebildet, so dass bei eingestelltem Regulierspalt kein automatisches Verstellen erfolgt. Selbstverständlich kann jedoch auch über Kontermuttern, Splintsicherungen, Sicherungsringe oder ähnliche Bauteile eine Sicherung der eingestellten Reguliersituation erfolgen.

Darüber hinaus kann es von Vorteil sein, wenn bei einem erfindungsgemäßen Regulierventil eine Einsatzbuchse in den Ventilkörper eingesetzt ist, welche die Hülse wenigstens abschnittsweise aufnimmt. Auch dies dient der leichteren Montage eines erfindungsgemäßen Regulierventils. Darüber hinaus können auch bereits bestehende Regulierventile über eine entsprechend angepasste Einsatzbuchse als Adapter mit einer erfindungsgemäßen Funktionalität nachgerüstet werden. Das bereits beschriebene Gewinde als Gewindeverbindung für die Einstellung der Reguliermöglichkeit kann z. B. zwischen einer solchen Einsatzbuchse und der beschriebenen Hülse ausgebildet sein. Dies ist insbesondere bei mehrteiligen Hülsen der Fall.

Ebenfalls Gegenstand der vorliegenden Erfindung ist ein Türschließer für eine Tür, aufweisend zumindest ein erfindungsgemäßes Regulierventil zur Regulierung der Dämpfung wenigstens eines Teils der Türbewegung. Dementsprechend bringt ein erfindungsgemäßer Türschließer die gleichen Vorteile mit sich, wie sie ausführlich mit Bezug auf ein erfindungsgemäßes Regulierventil erläutert worden sind.

Ein weiterer Gegenstand der vorliegenden Erfindung ist ein Verfahren zum Regulieren eines Hydraulikvolumenstroms unter Verwendung eines vorstehend beschriebenen Regulierventils, aufweisend die folgenden Schritte:
- Bewegen einer Hülse mit einer Innendichtfläche, die mit einer Außendichtfläche eines Regulierbauteils einen Dichtsitz ausbildet, entlang einer Bewegungsachse in einem Ventilkörper,
- Anschlagen des Regulierbauteils an einer Innenwand des Ventilkörpers,
- Erzeugen eines Durchlassspaltes zwischen der Außendichtfläche und der Innendichfläche durch die Bewegung der Hülse unter Erhöhung einer Federkraft einer Federvorrichtung auf das Regulierbauteil.

Dementsprechend bringt ein solches Verfahren die gleichen Vorteile mit sich, wie sie ausführlich mit Bezug auf ein erfindungsgemäßes Regulierventil erläutert worden sind.

Die vorliegende Erfindung wird näher erläutert anhand der beigefügten Zeichnungsfiguren. Die dabei verwendeten Begrifflichkeiten "links", "rechts", _{"}oben" und "unten" beziehen sich auf eine Ausrichtung der Zeichnungsfiguren mit normal lesbaren Bezugszeichen. Es zeigen schematisch:
- Fig. 1: einen Querschnitt durch eine Ausführungsform eines erfindungsgemäßen Regulierventils,
- Fig. 2: die Ausführungsform der Fig. 1 mit vollständig geöffnetem Regulierbauteil,
- Fig. 3: eine weitere Ausführungsform eines erfindungsgemäßen Regulierventils in geschlossener Position und
- Fig. 4: eine Explosionsdarstellung der Ausführungsform der Fig. 3.

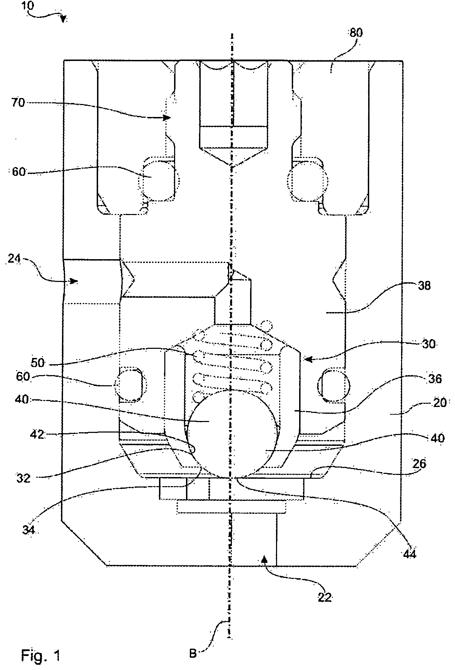

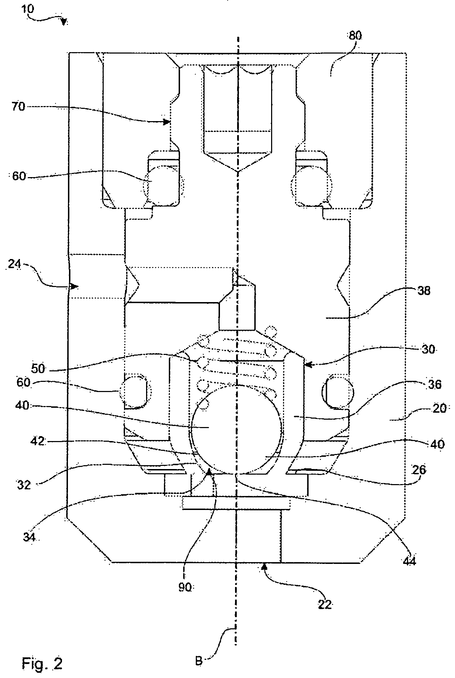

Die Fig. 1 und 2 zeigen eine erste Ausführungsform eines erfindungsgemäßen Regulierventils 10. In Fig. 1 befindet sich dieses Regulierventil 10 in vollständig geschlossenem Zustand, während Fig. 2 den vollständig geöffneten Zustand zeigt.

Dieses Regulierventil 10 ist mit einem topfförmigen und im Wesentlichen zylindrisch ausgestalteten Ventilkörper 20 ausgestattet. Im Innenraum dieses Ventilkörpers 20 ist eine Hülse 30 aufgenommen, welche bei dieser Ausführungsform zweiteilig ausgebildet ist. So wird diese Hülse 30 durch das Zusammensetzen eines Hülsenträgers 38 und eines Hülsenkopfes 36 zur Verfügung gestellt. Eine Federvorrichtung 50 stützt sich zwischen einem Regulierbauteil 40 und dem Hülsenträger 38 der Hülse 30 ab. Damit erfolgt eine Beaufschlagung des Regulierbauteils 40 mit einer Federkraft in Fig. 1 nach unten. Zwischen dem Regulierbauteil 40 und der Hülse 30 wird ein Dichtsitz ausgebildet, welcher durch das Kontaktieren von Außendichtflächen 42 des Regulierbauteils 40 und Innendichtflächen 32 der Hülse 30 zur Verfügung gestellt wird. Durch diesen Dichtsitz wird die nach unten gerichtete Hülsenöffnung 34 mithilfe des Regulierbauteils 40 abgedichtet. Die beaufschlagende Federkraft erzeugt hier die notwendige Dichtkraft.

Wie weiter zu erkennen ist, ist im Hülsenträger 38 oberhalb des Regulierbauteils 40 ein weiterer Fluidpfad als Regulierauslass vorgesehen, welcher mit einem Ventilauslass 24 des Ventilkörpers 20 korrespondiert. Hydraulikfluid kann in das Regulierventil 10 durch einen Ventileinlass 22 des Ventilkörpers 20 eintreten.

Darüber hinaus sind Dichtmittel 60 in Form von O-Ringen vorgesehen, um den Fluidpfad auf die gewünschte Richtung durch das Regulierventil 10, insbesondere am Regulierbauteil 40 vorbei sicherzustellen. Bei der Ausführungsform der Fig. 1 und 2 ist darüber hinaus eine Einsatzbuchse 80 zu erkennen, welche von oben in den Ventilkörper 20 eingesetzt ist und diesen Innenraum abschließt. Über eine Gewindevorrichtung 70, welche zwischen der Hülse 30, insbesondere dem Hülsenträger 38 und der Einsatzbuchse 80 ausgebildet ist, kann durch Rotation der Hülse 30 eine Translationsbewegung der Hülse 30 entlang der Bewegungsachse B erfolgen.

Nachfolgend soll kurz der Vorgang des Regulierens erläutert werden. Ausgehend von einem vollständig geschlossenen Regulierventil 10, wie es in Fig. 1 dargestellt ist, kann durch Relativrotation zwischen der Hülse 30 und der Einsatzbuchse 80 mithilfe der Gewindevorrichtung 70 eine Translationsbewegung der Hülse 30 relativ zum Ventilkörper 20 entlang der Bewegungsachse B erzeugt werden. Diese Relativbewegung resultiert in einem Anschlagen des Regulierbauteils 40 an einer Kontaktstelle 44 der Innenwand 26 des Ventilkörpers 20. Diese Anschlagsituation zeigt Fig. 1. Wird nun durch Rotation der Hülse 30 eine weitere Translationsbewegung entlang der Bewegungsachse B nach unten für die Hülse 30 erzeugt, löst sich die Außendichtfläche 42 von der Innendichtfläche 32, wodurch der Dichtsitz aufgehoben wird. Anstelle des Dichtsitzes bildet sich zwischen der Außendichtfläche 42 und der Innendichtfläche 32 ein Ringspalt aus, welcher einen Fluidstrom passieren lässt. Die Größe des Ringspaltes ist insbesondere hinsichtlich des Strömungsquerschnitts zu beachten, da ein größerer Querschnitt einen größeren Volumenstrom an Hydraulikfluid passieren lässt. Diese Translationsbewegung kann maximal bis zum Anschlag der Hülse 30 an der zugehörigen Innenwand 26 des Ventilkörpers 20 erfolgen. Diese vollständig geöffnete Position ist in Fig. 2 dargestellt. Die Relativbewegung kann jedoch auch bereits zu einem vorherigen Zeitpunkt gestoppt werden, so dass ein geringerer Strömungsquerschnitt und damit eine veränderte Dämpfungscharakteristik zur Verfügung gestellt wird.

Die Überdruckfunktion ist sowohl in der vollständig geschlossenen als auch in der vollständig geöffneten Position des Regulierventils 10 gegeben. Auch in allen Fällen dazwischen ist ein ausreichender Bewegungsspielraum des Regulierbauteils 40 nach oben, also gegen die Vorspannung durch die Federvorrichtung 50, möglich. Somit kann in Fig. 1 bei zu hohem Druck über eine vordefinierte Überdruckschwelle das Regulierbauteil 40 gegen die Federvorrichtung 50 nach oben gedrückt wird und den Ringspalt öffnen. Auch in Fig. 2 ist die gleiche Situation möglich, so dass bei sich erhöhendem Druck über eine maximal definierte Überdruckschwelle sich die Federvorrichtung 50 noch weiter zusammenpressen lässt und der Ringspalt sich vergrößert.

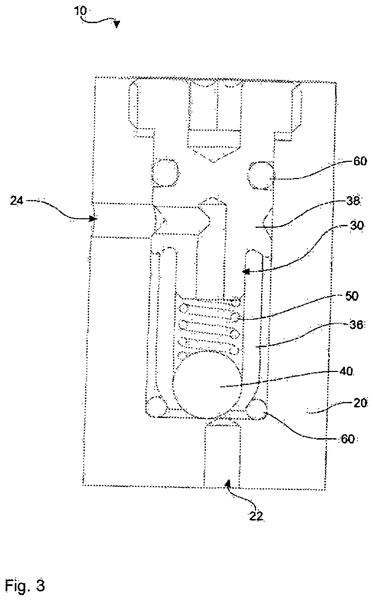

Die Fig. 3 zeigt eine weitere Ausführungsform eines erfindungsgemäßen Regulierventils 10, welches grundsätzlich die gleichen Bauteile aufweist, wie die Ausführungsform der Fig. 1 und 2. Bei dieser Ausführungsform ist jedoch auf eine Einsatzbuchse 80 verzichtet worden. Dies reduziert die Komplexität eines solchen Regulierventils 10 weiter.

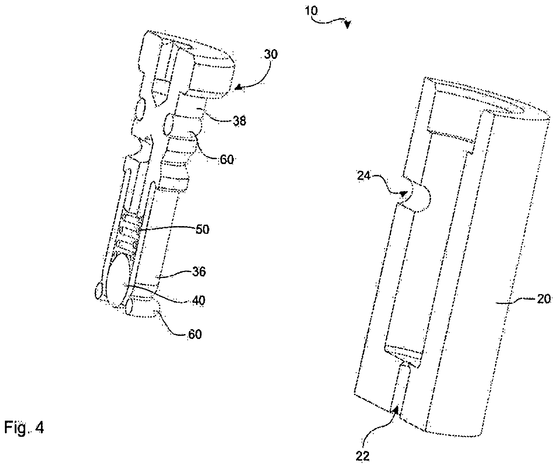

Die Fig. 4 zeigt eine schematische Teilexplosionsdarstellung der Ausführungsform der Fig. 3. Hier ist gut zu erkennen, dass ein umlaufender Ringspalt am Regulierauslass der Hülse 30 vorgesehen ist, so dass auch eine Relativrotation zwischen der Hülse 30 und dem Ventilkörper 20 den bereits beschriebenen Fluidpfad mit dem Ventilauslass 24 korrelieren lässt.

Die voranstehende Erläuterung der Ausführungsformen beschreibt die vorliegende Erfindung nur im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Regulierventil
- 20: Ventilkörper
- 22: Ventileinlass
- 24: Ventilauslass
- 26: Innenwand
- 30: Hülse
- 32: Innendichtfläche
- 34: Hülsenöffnung
- 36: Hülsenkopf
- 38: Hülsenträger
- 40: Regulierbauteil
- 42: Außendichtfläche
- 44: Kontaktstelle
- 50: Federvorrichtung
- 60: Dichtmittel
- 70: Gewindeverbindung
- 80: Einsatzbuchse
- 90: Durchlassspalt

- B: Bewegungsachse

## Patentansprüche

1. Regulierventil (10) für die Regulierung eines Hydraulikvolumenstroms, aufweisend einen Ventilkörper (20) mit einem Ventileinlass (22) und einem Ventilauslass (24), eine in dem Ventilkörper (20) entlang einer Bewegungsachse (B) bewegbare Hülse (30) mit einer Innendichtfläche (32) und ein Regulierbauteil (40) mit einer Außendichtfläche (42), welche mit der Innendichtfläche (32) einen Dichtsitz für das Abdichten einer Hülsenöffnung (34) der Hülse (30) ausbildet, wobei das Regulierbauteil (40) in Richtung des Dichtsitzes von einer Federvorrichtung (50) mit einer Federkraft beaufschlagt ist, **dadurch gekennzeichnet, dass** das Regulierbauteil (40) in Richtung der Federkraft durch die Hülsenöffnung (34) ragt und ausgebildet ist, um bei einer Bewegung der Hülse (30) entlang der Bewegungsachse (B) an einer Innenwand (26) des Ventilkörpers (20) anzuschlagen.

2. Regulierventil (10) nach Anspruch 1, **dadurch gekennzeichnet, dass** die Innendichtfläche (32) an der Hülse (30) und/oder die Außendichtfläche (42) an dem Regulierbauteil (40) umlaufend ausgebildet sind.

3. Regulierventil (10) nach einem der vorangegangenen Ansprüche, **dadurch gekennzeichnet, dass** die Innendichtfläche (32) und/oder die Außendichtfläche (42) zumindest abschnittsweise rotationssymmetrisch ausgebildet sind.

4. Regulierventil (10) nach einem der vorangegangenen Ansprüche, **dadurch gekennzeichnet, dass** das Regulierbauteil (40) ausgebildet ist an einer Kontaktstelle (44) an der Innenwand (26) des Ventilkörpers (20) anzuschlagen, wobei die Kontaktstelle (44) von dem Ventileinlass (22) beabstandet angeordnet ist.

5. Regulierventil (10) nach einem der vorangegangenen Ansprüche, **dadurch gekennzeichnet, dass** die Hülse (30) einen Hülsenkopf (36) mit der Innendichfläche (32) aufweist, welche in einen Hülsenträger (38) eingesetzt ist, wobei sich die Federvorrichtung (50) insbesondere gegen den Hülsenträger (38) abstützt.

6. Regulierventil (10) nach einem der vorangegangenen Ansprüche, **dadurch gekennzeichnet, dass** die Federvorrichtung (50) derart ausgebildet ist, dass die Federkraft hinsichtlich ihres Betrages einstellbar ist.

7. Regulierventil (10) nach einem der vorangegangenen Ansprüche, **dadurch gekennzeichnet, dass** die Federvorrichtung (50) ausgebildet ist, das Regulierbauteil (40) entlang der Bewegungsachse (B) mit der Federkraft zu beaufschlagen.

8. Regulierventil (10) nach einem der vorangegangenen Ansprüche, **dadurch gekennzeichnet, dass** wenigstens ein Dichtmittel (60) angeordnet ist, um die Hülse (30) gegen den Ventilkörper (20) abzudichten.

9. Regulierventil (10) nach einem der vorangegangenen Ansprüche, **dadurch gekennzeichnet, dass** zwischen der Hülse (30) und dem Ventilkörper (20) eine Gewindeverbindung (70) angeordnet ist, über welche durch Rotation der Hülse (30) die Bewegung der Hülse (30) entlang der Bewegungsachse (B) erzeugt wird.

10. Regulierventil (10) nach einem der vorangegangenen Ansprüche, **dadurch gekennzeichnet, dass** eine Einsatzbuchse (80) in den Ventilkörper (20) eingesetzt ist, welche die Hülse (30) wenigstens abschnittsweise aufnimmt.

11. Türschließer für eine Tür, aufweisend zumindest ein Regulierventil (10) mit den Merkmalen eines der Ansprüche 1 bis 10 zur Regulierung der Dämpfung wenigstens eines Teils der Türbewegung.

12. Verfahren zum Regulieren eines Hydraulikvolumenstroms unter Verwendung eines Regulierventils (10) gemäß einem der vorstehenden Ansprüche 1 bis 10, aufweisend die folgenden Schritte:
- Bewegen einer Hülse (30) mit einer Innendichtfläche (32), die mit einer Außendichtfläche (42) eines Regulierbauteils (40) einen Dichtsitz ausbildet, entlang einer Bewegungsachse (B) in einem Ventilkörper (20),
- Anschlagen des Regulierbauteils (40) an einer Innenwand (26) des Ventilkörpers (20),
- Erzeugen eines Durchlassspaltes (90) zwischen der Außendichtfläche (42) und der Innendichfläche (32) durch die Bewegung der Hülse (30) unter Erhöhung einer Federkraft einer Federvorrichtung (50) auf das Regulierbauteil (40).

## Claims

1. A regulating valve (10) for regulating a hydraulic volume flow, including a valve body (20) with a valve intake (22) and a valve outlet (24), a shell (30) with an inner sealing surface (32) movable along an axis of movement (B) in the valve body (20), and a regulating component (40) with an outer sealing surface (42), which with an the inner sealing surface (32) forms a seal seat for sealing a shell opening (34) of the shell (30), wherein a spring device (50) charges the regulating component (40) with a spring force in the direction of the seal seat, **characterized in that** the regulating component (40) protrudes through the shell opening (34) in the direction of the spring force and is formed in order to abut against an inner wall (26) of the valve body (20) during a movement of the shell (30) along the axis of movement (B).

2. The regulating valve (10) according to claim 1, **characterized in that** the inner sealing surface (32) is circumferentially formed at the shell (30) and/or the outer sealing surface (42) is circumferentially formed at the regulating component (40).

3. The regulating valve (10) according to any of the preceding claims, **characterized in that** the inner sealing surface (32) and/or the outer sealing surface (42) are/is rotationally symmetrically formed at least in sections.

4. The regulating valve (10) according to any of the preceding claims, **characterized in that** the regulating component (40) is formed to abut at a contact location (44) against the inner wall (26) of the valve body (20), wherein the contact location (44) is disposed spaced apart from the valve intake (22).

5. The regulating valve (10) according to any of the preceding claims, **characterized in that** the shell (30) includes a shell head (36) with an inner sealing surface (32), which shell is inserted into a shell carrier (38), wherein the spring device (50) props up in particular against the shell carrier (38).

6. The regulating valve (10) according to any of the preceding claims, **characterized in that** the spring device (50) is formed such that the spring force is adjustable with regard to the amount thereof.

7. The regulating valve (10) according to any of the preceding claims, **characterized in that** the spring device (50) is formed to charge the regulating component (40) with the spring force along the axis of movement (B).

8. The regulating valve (10) according to any of the preceding claims, **characterized in that** at least one sealing means (60) is disposed to seal the shell (30) with regard to the valve body (20).

9. The regulating valve (10) according to any of the preceding claims, **characterized in that** a thread connection (70) is disposed between the shell (30) and the valve body (20), which, by means of rotating the shell (30), generates the movement of the shell (30) along the axis of movement (B).

10. The regulating valve (10) according to any of the preceding claims, **characterized in that** an insert bushing (80) is inserted into the valve body (20), which the shell (30) accommodates at least in sections.

11. A door closer for a door, including at least one regulating valve (10) having the features of any of the claims 1 to 10 for regulating the dampening of at least one portion of the door movement.

12. A method for regulating a hydraulic volume flow while using a regulating valve (10) according to any of the preceding claims 1 to 10, including the following steps:
- moving a shell (30) along an axis of movement (B) in a valve body (20), which shell has an inner sealing surface (32), which with an outer sealing surface (42) of a regulating component (40) forms a seal seat,
- the regulating component (40) abutting against an inner wall (26) of the valve body (20),
- generating a passage gap (90) between the outer sealing surface (42) and the inner sealing surface (32) by means of moving the shell (30) while increasing a spring force of a spring device (50) onto the regulating component (40).

## Revendications

1. Vanne de réglage (10) pour le réglage d'un débit volumétrique hydraulique, comprenant un corps de vanne (20) avec une admission de vanne (22) et une sortie de vanne (24), une douille (30), mobile à l'intérieur du corps de vanne (20) le long d'un axe de mouvement (B) et avec une surface d'étanchéité intérieure (32), et un composant de réglage (40) avec une surface d'étanchéité extérieure (42), laquelle avec la surface d'étanchéité intérieure (32) aménage un siège d'étanchéité pour étanchéifier une ouverture de douille (34) de la douille (30), dans laquelle le composant de réglage (40) est chargé avec une force de ressort par un dispositif à ressort (50) en direction du siège d'étanchéité, **caractérisée en ce que**, en direction de la force de ressort, le composant de réglage (40) fait saillie à travers l'ouverture de douille (34) et est aménagé à buter contre une paroi intérieure (26) du corps de vanne (20) lors d'un mouvement de la douille (30) le long de l'axe de mouvement (B).

2. Vanne de réglage (10) selon la revendication 1, **caractérisée en ce que** la surface d'étanchéité intérieure (32) est aménagée de façon circonférentielle sur la douille (30) et/ou la surface d'étanchéité extérieure (42) est aménagée de façon circonférentielle sur le composant de réglage (40).

3. Vanne de réglage (10) selon l'une des revendications précédentes, **caractérisée en ce que** la surface d'étanchéité intérieure (32) et/ou la surface d'étanchéité extérieure (42) sont aménagées/est aménagée à symétrie de révolution au moins par sections.

4. Vanne de réglage (10) selon l'une des revendications précédentes, **caractérisée en ce que** le composant de réglage (40) est aménagé à buter à un endroit de contact (44) contre la paroi intérieure (26) du corps de vanne (20), dans laquelle l'endroit de contact (44) est agencé de façon espacée de l'admission de vanne (22).

5. Vanne de réglage (10) selon l'une des revendications précédentes, **caractérisée en ce que** la douille (30) comprend une tête de douille (36) avec la surface d'étanchéité intérieure (32), laquelle est insérée dans un porte-douille (38), dans laquelle le dispositif de ressort (50) s'appuie tout particulièrement contre le porte-douille (38).

6. Vanne de réglage (10) selon l'une des revendications précédentes, **caractérisée en ce que** le dispositif de ressort (50) est aménagé de telle façon que la force de ressort est ajustable en ce qui concerne sa puissance.

7. Vanne de réglage (10) selon l'une des revendications précédentes, **caractérisée en ce que** le dispositif de ressort (50) est aménagé à charger le composant de réglage (40) avec la force de ressort le long de l'axe de mouvement (B).

8. Vanne de réglage (10) selon l'une des revendications précédentes, **caractérisée en ce qu'**au moins un moyen d'étanchéité (60) est agencé à étanchéifier la douille (30) contre le corps de vanne (20).

9. Vanne de réglage (10) selon l'une des revendications précédentes, **caractérisée en ce qu'**une connexion à filetage (70) est agencée entre la douille (30) et le corps de vanne (20), par l'intermédiaire de laquelle, par une rotation de la douille (30), est généré le mouvement de la douille (30) le long de l'axe de mouvement (B).

10. Vanne de réglage (10) selon l'une des revendications précédentes, **caractérisée en ce qu'**un manchon d'insertion (80) est inséré dans le corps de vanne (20), lequel manchon reçoit la douille (30) au moins en sections.

11. Ferme-porte pour une porte, comprenant au moins une vanne de réglage (10) ayant les caractéristiques de l'une des revendications 1 à 10 pour le réglage de l'amortissement au moins d'une partie du mouvement de la porte.

12. Méthode pour régler un débit volumétrique hydraulique en employant une vanne de réglage (10) selon l'une des revendications ci-avant 1 à 10, comprenant les étapes suivantes :
- mouvoir une douille (30) avec une surface d'étanchéité intérieure (32), laquelle avec une surface d'étanchéité extérieure (42) d'un composant de réglage (40) aménage un siège d'étanchéité, le long d'un axe de mouvement (B) dans un corps de vanne (20),
- le composant de réglage (40) butant contre une paroi intérieure (26) du corps de vanne (20),
- générer une interstice de passage (90) entre la surface d'étanchéité extérieure (42) et la surface d'étanchéité intérieure (32) par le mouvement de la douille (30) tout en augmentant une force de ressort d'un dispositif de ressort (50) sur le composant de réglage (40).
